# EUROPÄISCHE PATENTSCHRIFT

(11) **EP 0 382 105 B1**
(45) Veröffentlichungstag und Bekanntmachung des Hinweises auf die Patenterteilung: **20.04.1994**
(21) Anmeldenummer: 90102042.0
(22) Anmeldetag: 02.02.1990
(51) Int. Cl.: A21C 3/06

(54) **Vorrichtung zum Herstellen von Backwerk aus Teigstücken**
Device for preparing baked goods from pieces of dough
Appareil pour la préparation des produits de boulangerie à partir de morceaux de pâte

(30) Priorität: 09.02.1989 DE 3903746
(43) Veröffentlichungstag der Anmeldung: 16.08.1990
(73) Patentinhaber: A. FRITSCH GMBH & CO. KG, D-97348 Markt Einersheim (DE)
(72) Erfinder: Elgner, Rudolf, D-8711 Markt-Einersheim (DE); Beier, Siegbert, D-8710 Kitzingen (DE); Glaser, Günther, D-8712 Volkach (DE)
(74) Vertreter: Matschkur, Götz, Lindner Patent- und Rechtsanwälte

(56) Entgegenhaltungen:
- BE-A- 902 440
- DE-B- 1 299 261
- DE-B- 1 302 081
- FR-A- 2 486 771
- US-A- 4 130 314

## Beschreibung

Die Erfindung richtet sich auf eine Vorrichtung zur Herstellung von Backwerk unter Ausschneiden von nebeneinanderliegenden Teigstücken aus einer auf einem Transportband zugeführten Teigbahn und anschließendem Vereinzeln und Positionieren der Teigstücke mittels sie einzeln bewegender Greifeinrichtungen.

Solche Vorrichtungen finden Anwendung beispielsweise bei der Herstellung von Hörnchen oder sogenannten Croissants aus Blätter- oder Plunderteig. Die einzelnen Teigstücke von beispielsweise dreieckiger Grundform werden im allgemeinen von einer Schneidwalze in parallelen Längsstreifen ausgeschnitten, in denen zwei aufeinanderfolgende Teigstücke um jeweils 180° gegeneinander versetzt sind. Auf diese Weise wird ein Anfall von Restteig praktisch vermieden. Jede zugeschnittene Reihe von gleichsinnig liegenden Teigstücken muß zunächst von der Schnittstelle und damit von dem Teigband in Transportrichtung abgerückt und dann quer zu dieser Richtung noch voneinander getrennt werden, um einen ausreichenden Zwischenraum zwischen den einzelnen aufeinanderfolgenden Reihen und den einzelnen Teigstücken in diesen Reihen zu gewinnen, der ein einwandfreies Hantieren, z.B. Drehen der ausgeschnittenen Teigstücke in die gewünschte Position, zu läßt. Ggf. können dann die Reihen und/oder die Teigstücke einer Reihe wieder mehr oder weniger weit zusammengeführt bzw. so zueinander positioniert werden, daß ihre Weiterverarbeitung, z.B. das Einwickeln zu der gewünschten Hörnchenform, unter maximaler Ausnutzung der vorhandenen Grundfläche möglich ist.

Die hierzu dienenden pneumatisch arbeitenden Greifeinrichtungen, die das einzelne Teigstück erfassen und es in der erforderlichen Bewegungsbahn gegenüber dem unterliegenden Band in die gewünschte Position verbringen, sind bekannt. Von einer evtl. erforderlichen Drehbewegung abgesehen, werden die Greifeinrichtungen in Kurvenbahnen geführt, was verhältnismäßig komplizierte und schwere Konstruktionen verlangt. Das Auswechseln der Greifeinrichtungen oder Greifer bei Wechsel der jeweiligen Teigstückformate bereitet erhebliche Schwierigkeiten, da diese Vorrichtungen recht aufwendig sind. Es ist ein Verfahren und eine Vorrichtung zum Vereinzeln und Positionieren von Teigstücken bekannt (BE-A-902 440), bei dem die einzelnen Teigstücke mittels Nadeln 36 ergriffen werden, die vom Flansch 35 je einer Greifereinheit 32 vorspringen. Quer zur Transportrichtung ist ein Pantograph 27 aufgespannt, an dem die Flansche 35 um eine Achse 33 drehbar angelenkt sind. Allerdings ist mit den parallelogrammartig verbundenen, gegeneinander beweglichen Schenkeln des Pantographen stets nur eine Führung der Greifereinheiten koordiniert und synchron zueinander möglich. Also lassen sich die Teigstücke nicht vollständig unabhängig voneinander vereinzeln und positionieren.

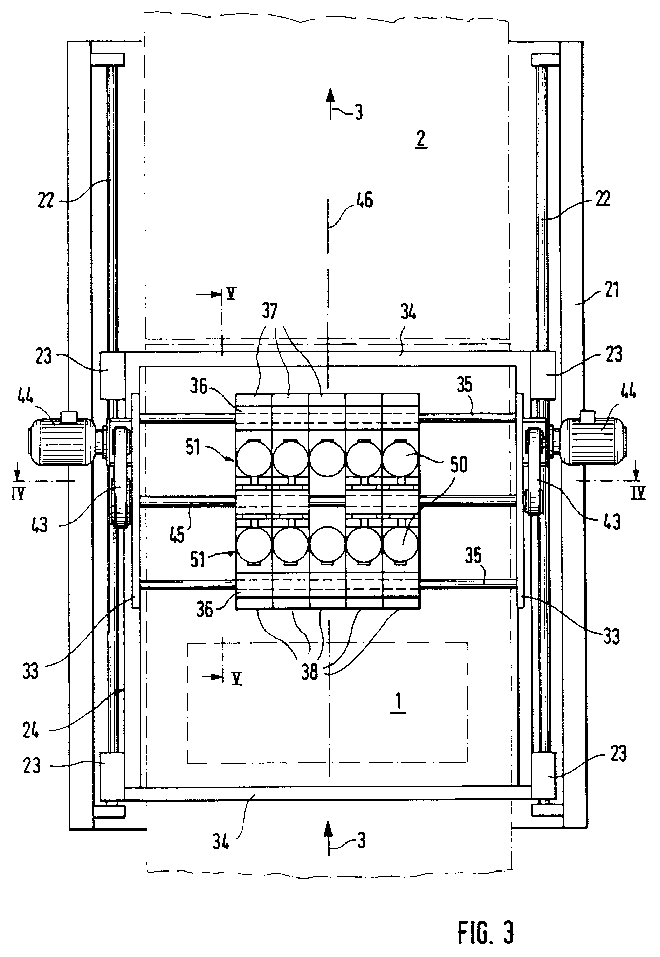

Ferner ist eine Vorrichtung zum Umsetzen von Teigstücken mit Erfassungseinrichtungen bekannt (DE-A-1 302 081), deren Greifeinrichtung mit mindestens zwei im Abstand voneinander angeordneten, gegeneinander bewegbaren Klauen versehen ist. Die Greifeinrichtung arbeitet nach dem Prinzip der Hand, die Klauen stellen die Finger einer Hand dar. Zur Bewegung und Betätigung einer Klaue wird vorgeschlagen, diese als um seinen Winkel schwenkbaren Winkhebel auszubilden, dessen einer Schenkel, der Betätigungsschenkel, durch eine in ihrer Längsrichtung verschiebbar gelagerte Klauenstange schwenkbar ist. Durch die Längsverschiebung der Klauenstange werden die Klauen mit ihren freien Enden gegeneinander geschwenkt. Zwar sind alle Greifeinrichtungen 1 über eine jeweils eigene Führungseinrichtung 14 an einer Trägerplatte 15 angebracht. Jedoch ist dabei lediglich ein Drehen der Greifeinrichtung um die Achse ihrer Klauenstange möglich (vgl. Spalte 3, Zeilen 60 und 61). Die Führungseinrichtung 14 ist, wie z.B. Figur 3 zeigt, an einer Trägerplatte 15 jeweils angelenkt. Möglichkeiten zu einer Linearführung in Längs- oder Querrichtung sind also nicht gegeben.

Es ergibt sich ein erhebliches Bedürfnis nach der Umgestaltung der bekannten Vorrichtung in einer Weise, die einfacher im Aufbau und vor allem wirksamer in ihrer Funktion, insbesondere im voneinander unabhängigen Positionieren einzelner Teigstücke ist. Darüber hinaus soll eine verbesserte, vor allem flexiblere Handhabung beim Austauschen der Werkzeuge zum Übergang von einem Teigformat zum anderen ermöglicht sein.

Zur Lösung wird bei einer Vorrichtung mit den im ersten Teil des Anspruchs 1 genannten Merkmalen erfindungsgemäß vorgeschlagen,
- über dem Transportband ein achsparallel zu diesem verstellbaren Schlitten in beidseitig an einem Maschinenrahmen angeordneten Führungen zu lagern,
- diesen Schlitten durch eine Antriebseinrichtung mit dem Maschinenrahmen zu verbinden,
- am Schlitten die Greifeinheiten nebeneinander und im rechten Winkel zur Transport-Bewegungsrichtung je auf einer zwischen Seitenwangen des Schlittens angeordneten Parallelführung verschiebbar zu lagern und
- die Greifeinheiten mit dem Schlitten in Antriebsverbindung zu setzen.

Die bisher durch Kurvenführungen hervorgerufene Bewegung der einzelnen Greifeinheiten werden nunmehr in zwei rechtwinklig zueinander stehende Bewegungskomponenten aufgelöst, nämlich einmal in der allgemeinen Transportrichtung der Teigbandzuführung und eine Richtung quer hierzu, d.h. quer zu der Bewegung des Förderbandes. Diese Bewegungskomponenten können gleichzeitig oder in zeitlichem Abstand hintereinander erfolgen, woraus sich eine außerordentlich große Variationsmöglichkeit bei der praktischen Verwirklichung dieser Erfindungsgedanken ergibt. Die Resultierende der einzelnen Bewegungskomponenten ergibt dann das notwendige Bewegungsspiel aus der Ausgangsposition der aus dem Teigband ausgeschnittenen Teigstücke in die Position, in welcher ihre Weiterverarbeitung schließlich erfolgt, wobei zu der translatorischen Bewegung noch eine Drehbewegung um die Achse der Teigstücke hinzukommen kann. Zur besseren Handhabung werden die Teigstücke vielfach zunächst weiter auseinandergeführt, um dann schließlich wieder zusammengerückt zu werden, damit die nachfolgenden Backbleche oder Gärbänder eine maximale Ausnutzung erlangen.

Für die eine Bewegungskomponente wird eine Längsbewegung des Schlittens nutzbar gemacht, die andere Bewegungskomponente entspringt einer Bewegung der Greifeinheiten in ihrer Führung des Schlittens. Die Drehbewegung wird im allgemeinen den beiden translatorischen Bewegungskomponenten nachgeschaltet. Sie kann je nach der gewünschten Position der zu bearbeitenden Teigstücke bei sämtlichen Teigstücken gleich oder aber bei den Teigstücken aufeinanderfolgender Teigstückreihen unterschiedlich sein.

Der Schlitten ist vorteilhaft in beidseitig am Maschinenrahmen angeordneten Führungen gelagert und durch eine Antriebseinrichtung mit dem Maschinenrahmen verbunden. Bevorzugt dient hierzu nach einem anderen Merkmal der Erfindung ein an den Maschinenrahmen angeordneter Kettentrieb, an den wiederum der Schlitten angeschlagen ist. Ein solcher Kettentrieb gestattet eine außerordentlich exakte Führung des Schlittens, die wegen der genauen Zuordnung der Greifer zu den Teigstücken höchst erwünscht ist.

Es liegt im Rahmen der Erfindung, daß die Greifeinheiten je eine Grundplatte aufweisen, die gemeinsam auf einer zwischen zwei Seitenwangen des Schlittens angeordneten Parallelführung verschiebbar gelagert ist und mit dem Schlitten selbst in Antriebsverbindung steht. Diese Anordnung dient der quer zur allgemeinen Förderrichtung des Bandes gerichteten Bewegungskomponente. Der Antriebsmotor selbst kann entweder an der Greifeinheit selbst oder aber auch am Schlitten vorgesehen sein. Die letztere Art der Ausbildung verdient wegen der an den Greifeinheiten beengten Raumverhältnissen im allgemeinen den Vorzug.

Es liegt im Rahmen des Grundgedankens der Erfindung, daß je zwei Greifeinheiten in einander entsprechendem Abstand von einer Längsmittelebene einen gemeinsamen Antrieb aufweisen. Wird nämlich das die einzelnen Teigstücke ergebende Teigband etwa in der Mitte es Zuführbandes liegen, werden die Teigstücke zum Zwecke ihres Vereinzelns nach beiden Seiten dieses Bandes auseinanderbewegt werden müssen. Deshalb ist es besonders zweckmäßig, die Antriebsverbindung symmetrisch auszugestalten, also jeweils zwei Greifeinheiten antriebsmäßig zusammenzufassen, wenn auch bei entgegengesetzter Bewegungsrichtung. Diesem wesentlichen Grundgedanken entspricht die Erfindung in ihrer weiteren Ausgestaltung dadurch, daß der Antrieb für je zwei Greifeinrichtungen eine in den Seitenwangen des Schlittens gelagerte antreibbare Gewindespindel aufweist, die an beiden Hälften eine einander entgegengerichtete Gewindesteigung aufweist und auf der je eine mit einer Greifeinheit verbundene Spindelmutter sitzt. Ein derartiger Antrieb arbeitet außerordentlich exakt, worauf es bei solchen Vorrichtungen entscheidend ankommt. Er läßt sich darüber hinaus mit einem Minimum an konstruktivem Aufwand realisieren, und er trägt in bevorzugter Weise dem Gedanken der Zusammenfassung des Antriebs zweier Greifeinheiten Rechnung. Dabei können nach einem anderen Merkmal der Erfindung mehrere je zwei Greifeinheiten zugeordnete Gewindespindeln übereinander in den Seitenwangen des Schlittens gelagert sein. Dies ist erforderlich, um auf möglichst engem Raum mehrere Paare von Greifeinheiten vorzusehen und diese antriebsmäßig zu verbinden. Es können sowohl ungerade Zahlen von parallel nebeneinander angeordneten Greifeinheiten Verwendung finden als auch eine gerade Anzahl denkbar ist. Im Falle einer ungeraden Anzahl von nebeneinander angeordneten Greifeinheiten ist vorteilhaft die mittlere Greifeinheit unverschiebbar gelagert. Die zu beiden Seiten an diese mittlere Einheit angrenzenden Einheiten sind dann zu einem antriebsmäßig verbundenen Paar zusammengefaßt und die nach beiden Außenseiten folgenden weiteren Einheiten ebenfalls.

Ist die Bewegungsbahn eines jeden Paares von Greifeinheiten durch beidseitige Anschläge nach außen begrenzt, so wird die Gewähr dafür geboten, daß nicht etwa z.B. durch Toleranzunterschiede oder Spiel auf den Gewindespindeln im laufenden Betrieb zunehmende seitliche Versetzungen der Bewegungsspiele der einzelnen Greifeinheiten oder Paare von Greifeinheiten vorkommen.

Besonders zweckmäßig ist es, wenn jede Greifeinheit wenigstens zwei Greifer in zum Transportband achsparalleler Richtung hintereinander aufweist, von denen jede Reihe einer Reihe der ausgeschnittenen Teigstücke zugeordnet ist. Je mehr Greifer in einer Längsrichtung hintereinander auf einer Greifeinheit vorgesehen sind, um so größer ist die Leistung der Vorrichtung, aber auch die Größe des Arbeitstaktes. Sind mehrere Reihen von Greifern in Transportrichtung der Bänder hintereinander vorgesehen, so läßt sich der Grundgedanke der Erfindung in zwei verschiedenen Alternativen verwirklichen. Zunächst sieht die Erfindung vor, daß die Transportgeschwindigkeit des die vereinzelten Teigstücke abfördernden Transportbandes geringer ist als die des Schlittens und die Greifer einer in Transportrichtung hinteren Reihe von Greifern zeitlich vor den Greifern der jeweils nächstvorderen Reihe die Teigstücke freigegen. Auf diese Weise werden ohne aufwendige apparative Vorkehrungen die Teigstücke in einer der Transportrichtung entsprechenden Bewegungskomponente voneinander getrennt. Die einzelnen Greifer sind dann so gesteuert, daß sie zeitlich nacheinander außer Eingriff mit den Teigstücken gelangen. Eine andere Alternative besteht darin, daß die Transportgeschwindigkeit des die vereinzelten Teigstücke abfördernden Transportbandes höher ist als die des Schlittens und die Greifer einer in Transportrichtung vorderen Reihe von Greifern vor den Greifern der jeweils nachfolgenden Reihe die Teigstücke freigeben. Gelangen die Greifer einer jeweils vorderen Reihe außer Eingriff mit den Teigstücken, so werden diese von dem schneller laufenden Transportband mitgeführt, und sie entfernen sich damit von den Teigstücken der nächsten Reihe um einen bestimmten Abstand. Dieser Vorgang wiederholt sich so oft, wie Reihen von Greifern hintereinander angeordnet sind.

Die Greifer weisen zweckmäßig eine in ihrer Kontur der Grundform der Teigstücke annähernd entsprechende auswechselbare Grundplatte auf. Wie die Erfindung weiter vorsieht, ist an einer ausfahrbaren Fußplatte des Greifers ein Satz von durch Bohrungen in der Grundplatte in das Teigstück eingreifenden Dornen vorgesehen. Besonders sinnvoll ist es, wenn nach einem anderen Merkmal der Erfindung die Dorne an einem mittels eines Schnellverschlusses an der Fußplatte zu befestigenden Rahmen angebracht sind.

Schließlich liegt es im Rahmen der Erfindung, daß der Schlitten um eine quer zur Bewegungsrichtung des Transportbandes verlaufende Achse hochklappbar ist, um dadurch das Auswechseln der Werkzeuge des Greifers beim Umrüsten auf Teigstücke unterschiedlicher Form zu erleichtern.

Weitere Merkmale, Einzelheiten und Vorteile der Erfindung ergeben sich aus der folgenden Beschreibung einer bevorzugten Ausführungsform der Erfindung sowie anhand der Zeichnung. Hierbei zeigen:
- Fig. 1: das System der Arbeitsweise der Vorrichtung in schematischer Draufsicht;

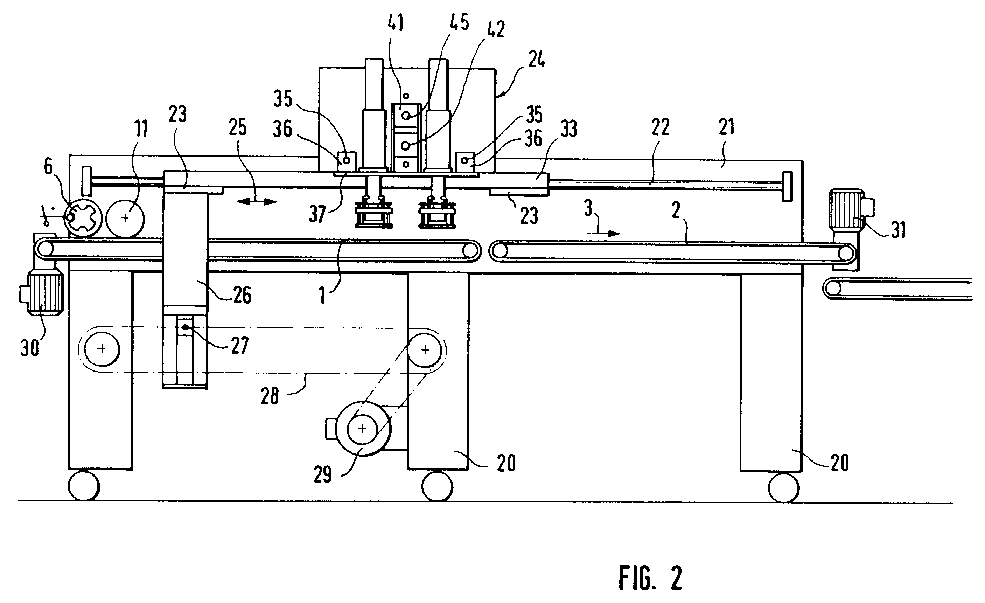

- Fig. 2: einen Längsschnitt durch die Vorrichtung;
- Fig. 3: eine Draufsicht auf diese;
- Fig. 4: einen Schnitt etwa nach Linie IV - IV in Fig. 3;
- Fig. 5: einen Schnitt etwa nach Linie V - V in Fig. 3;
- Fig. 6: einen vertikalen Schnitt durch einen Greifer;
- Fig. 7: einen Schnitt etwa nach Linie VII - VII in Fig. 6;
- Fig. 8: einen Schnitt etwa nach Linie VIII - VIII in Fig. 6;
- Fig. 9: ein Detail des Greifers ebenfalls im vertikalen Schnitt und
- Fig.10: einen Schnitt etwa nach Linie X - X in Fig. 9.

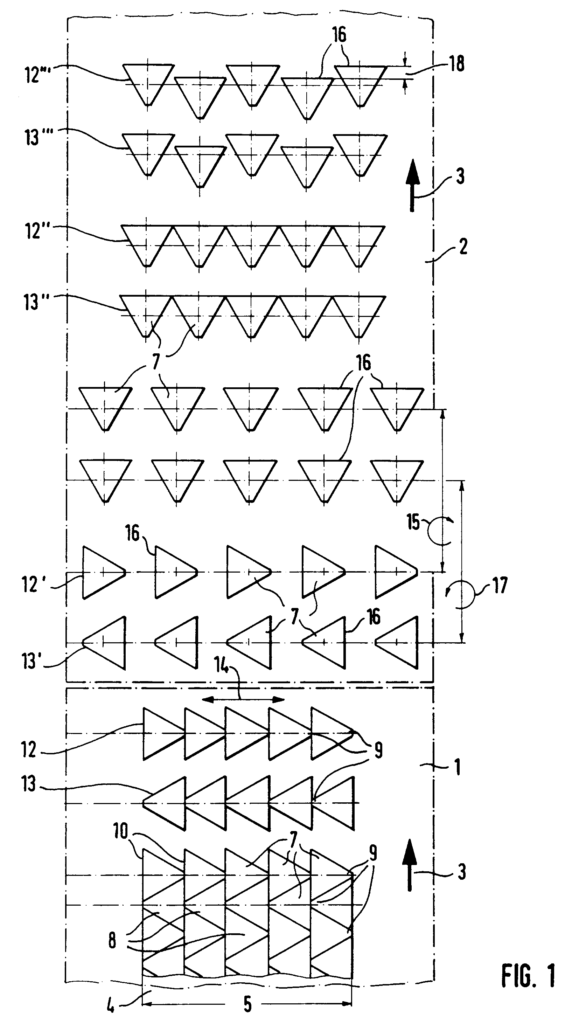

In der schematischen Darstellung nach Fig. 1 sind zwei Transportbänder 1 und 2 hintereinander geschaltet. In Pfeilrichtung 3 wird ein ausgewalztes Teigband von der Breite 5 durch das Transportband 1 herangeführt. Beim Durchlauf unter der Walze 6 wird dieses Teigband 4 in eine Vielzahl von dreieckigen Teigstücken 7 aufgeschnitten, die bei der wiedergegebenen Ausführungsform in fünf Reihen 8 nebeneinander derart angeordnet sind, daß in jeder Reihe 8 die Spitze 9 der dreieckigen Teigstücke 7 einander entgegengerichtet sind. Auf diese Weise wird bei dieser Ausführungsform ein verbleibender Restteig vermieden. Die Längsschnitte 10 zwischen den einzelnen Reihen 8 werden durch eine mit scheibenförmigen Messern besetzte Schneidwalze 11 bewirkt. Zunächst müssen die einzelnen Reihen 12 bzw. 13 der aus dem Teigband 4 geschnittenen Teigstücke 7 in Förderrichtung 3 auseinandergerückt werden. Die Teigstücke der Reihe 12 weisen mit ihrer Spitze in Fig. 1 nach rechts, die Teigstücke 7 der nachfolgenden Reihe 13 hingegen nach links. Um die Teigstücke 7 nun derart wenden zu können, daß sie gleichsinnig liegen, müssen sie auch in Pfeilrichtung 14 quer zur Transportrichtung 3 des Bandes 1 auseinander gerückt werden. Dies lassen die Reihen 12′ und 13′ erkennen. Im folgenden Arbeitsgang werden nun die Teigstücke 7 der Reihe 12′ entsprechend dem Pfeil 15 um 90° gewendet, so daß die Dreiecksbasis 16 in die Förderrichtung 3 weist. Die Teigstücke 7 der Reihe 13′ hingegen werden im entgegengesetzten Sinn, aber wiederum um 90° in Pfeilrichtung 17 gewendet, so daß auch ihre Dreiecksbasis 16 im gleichen Sinn in Förderrichtung 3 weist. Ausgehend hiervon werden dann die Teigstücke 7 wieder seitlich zusammengerückt, was die Reihen 12˝ und 13˝ erkennen lassen. Hier berühren sich die Teigstücke 7 im Bereich ihrer Basis, was die nachfolgende Formgebung der Hörnchen aus den Teigstücken 7 behindern würde. Deshalb werden sie in einem letzten Arbeitsgang in der Weise gegeneinander versetzt, daß, wie die Reihen 12‴ und 13‴ erkennen lassen, die Basis 16 der Dreiecke um das Maß 18 gegeneinander versetzt ist. Auf diese Weise wird bei der hier wiedergegebenen Ausführungsform eine größtmögliche Ausnutzung der Backblechfläche bzw. eines Gärbandes erreicht.

Die diese Arbeitsgänge ausführende Vorrichtung ist in den folgenden Figuren der Zeichnung wiedergegeben. Auf einem Untergestell 20, welches ggf. fahrbar sein kann, sind an der Innenseiten von seitlichen Wangen 21 Säulen 22 angeordnet, die zur Führung der vier Buchsen 23 eines insgesamt mit 24 bezeichneten Schlittens dienen. Die Länge der Säulen 22 begrenzt zugleich den maximalen Bewegungsraum 25 des Schlittens 24. Mit einem nach unten gerichteten Fortsatz 26 des Schlittens 24 ist dieser bei 27 an einen Kettentrieb 28 angeschlagen, der vom steuerbaren Motor 29 angetrieben wird.

Im Maschinenrahmen 20 sind die beiden Transportbänder 1 und 2 mit ihren zugehörigen Antriebsmotoren 30 und 31 gelagert.

Der Schlitten 24 weist zwei Seitenwangen 33 auf, die durch vordere und hintere Querstreben 34 verbunden sind. Die Seitenwangen 33 dienen außerdem zur Lagerung der beiden parallelen Führungssäulen 35, auf denen über je eine Buchse 36, wie aus Fig. 3 ersichtlich, die Grundplatten 37 von hier fünf nebeneinander angeordneten Greifeinheiten 38 quer zur Transportrichtung 3 verschiebbar gelagert sind. Jede Grundplatte 37 trägt in den beiden Lagern 39 eine mit einer Innengewindebohrung 40 versehene Spindelmutter 41. Durch diese ist eine Gewindespindel 42 hindurchgeführt, deren beide Enden wiederum in den Wangen 33 des Schlittens 24 gelagert sind. Das die eine Wange 33 nach außen überragende Spindelende ist über einen Riementrieb 43 mit einem Antriebsmsotor 44 verbunden, der seinerseits an der Wange 33 angeflanscht ist.

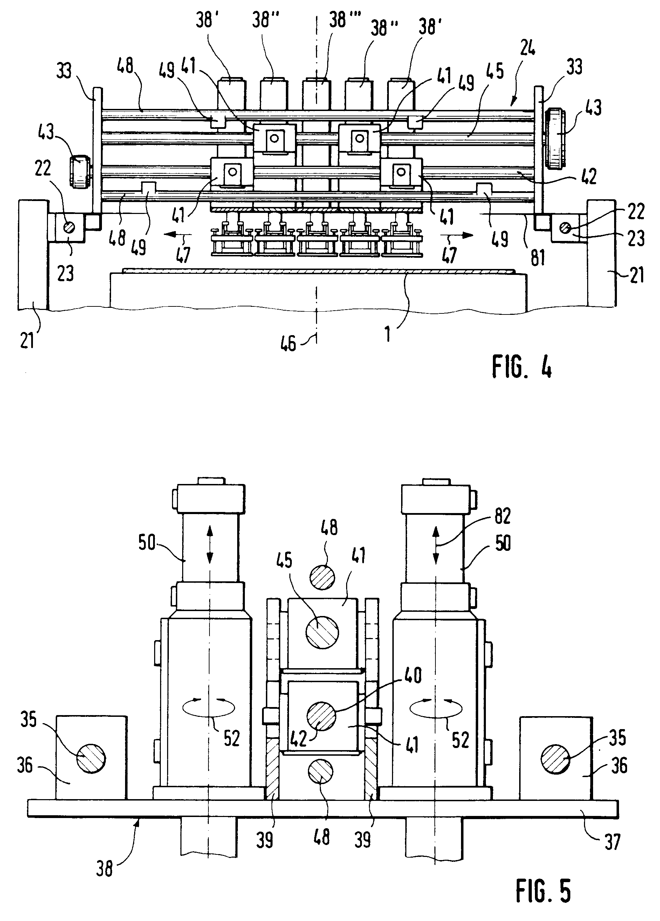

Wie Fig. 4 erkennen läßt, durchsetzt die Gewindespindel 42 entsprechende Spindelmuttern 41 der beiden äußeren Greifereinheiten 38. Über dieser Gewindespindel 42 ist eine weitere Spindel 45 ebenfalls in den Seitenwangen 33 des Schlittens 24 gelagert, und auf ihr sitzen die Spindelmuttern 41 der beiden nächst inneren Greifereinheiten 38˝. Die mittlere der in der Zeichnung wiedergegebenen fünf Einheiten 38, mit 38‴ bezeichnet, steht mit keiner der beiden Gewindespindeln 42, 45 in Verbindung. Die Gewindespindeln 42, 45 weisen beiderseits der Längsmittelebene 46 eine entgegengerichtete Steigungsrichtung bei gleichem Maß der Steigung auf. Wird somit eine der beiden Gewindespindeln 42, 45 in der entsprechenden Drehrichtung angetrieben, so bewegen sich die jeweils paarweise zusammengefaßten Einheiten 38′ bzw. 38˝ in Pfeilrichtung 47 auseinander (vgl. Fig. 4). Die mittlere Einheit 38‴ hingegen bleibt in ihrer mittleren Position. Auf den Verbindungsstangen 48 zwischen den Seitenwangen 33 des Schlittens 24 angebrachte Anschläge 49 begrenzen, wie aus Fig. 4 ersichtlich ist, in unterschiedlichem Maße diese durch die Pfeile 47 angedeutete Auswärtsbewegung der verschiedenen Greifeinheiten 38 in unterschiedlicher Weise.

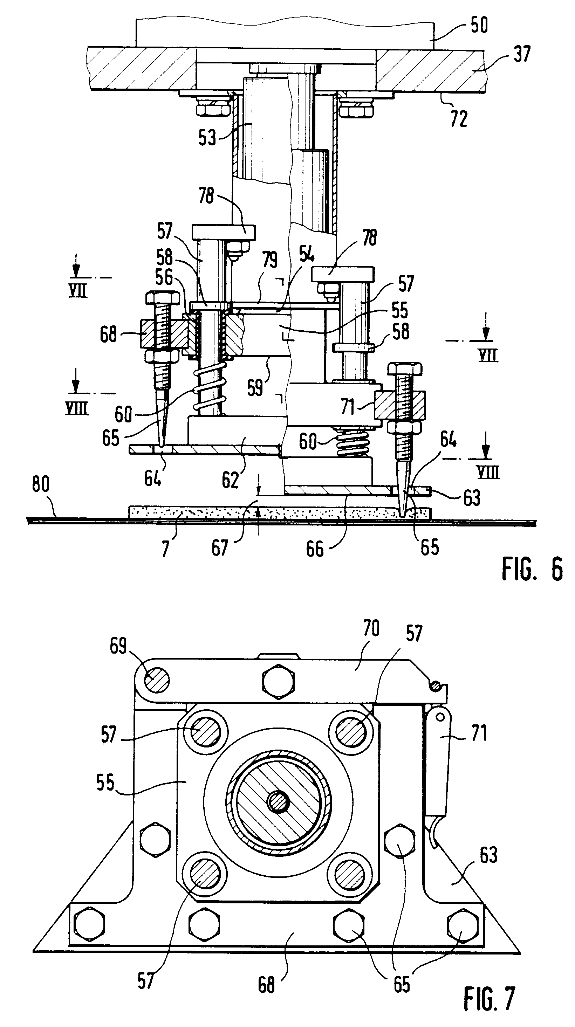

Jede der fünf wiedergegebenen Greifeinheiten 38 weist hier zwei Greifer 50 auf, die in zur Förderrichtung 3 der Bänder 1, 2 achsparalleler Richtung angeordnet sind. Jede Reihe 51 solcher Greifer 50 ist jeweils einer Reihe 12, 13 von aus dem Teigband 4 ausgeschnittenen Teigstücken 7 zugeordnet (s. Fig. 1). Diese Greifer 50 dienen der Handhabung der Teigstücke 7 auf den Bändern 1, 2, und sie führen zu diesem Zweck eine Hubbewegung 82 und eine Drehbewegung 52 aus. Der aus dem Zylinder 53 des Greifers 50 nach unten ausfahrbare Kolben 54 trägt eine Platte 55. An vier Ecken der Platte 55 ist in je einer Buchse 56 ein Führungsstift 57 gelagert, der mit einem Kragen 58 der Oberseite der Platte 55 aufliegt. An der Unterseite 59 der Platte 55 stützt sich eine Druckfeder 60 ab, die andererseits einer die unteren Enden der Stifte 57 verbindenden Platte 62 anliegt. Diese trägt die hier dreieckige Grundplatte 63, deren Kontur der Grundform der Teigstücke 7 entspricht, im vorliegenden Fall dreieckig ausgebildet ist. Diese Grundplatte 63 weist eine Mehrzahl von Bohrungen 64 auf. Diese dienen dem Durchtritt von am unteren Ende zugespitzten Dornen 65, die, wie insbes. Fig. 6 erkennen läßt, in das Teigstück 7 schonend eingreifen, wohingegen die Unterfläche 66 der Grundplatte 63 sich in Abstand 67 von der Oberfläche des Teigstücks 7 befindet. Die Dorne 65 sind an einem U-förmigen Rahmen 68 befestigt, der mittels eines bei 69 angelenkten Schenkels 70 verschließbar ist und in eine Nut 71 der Platte 55 eingreift. Der Rahmen 68 läßt sich mittels eines Kniehebel-Schnellverschlusses 71 öffnen und schließen.

An der Unterseite 72 der Grundplatte 37 einer Greifereinheit 38 ist ein pneumatisch betriebenes Antriebselement 74 angebracht, welches mittels eines Stössels 75 dem drehbaren Kolben 76 im Zylinder 53 eine Drehbewegung 52 erteilt, deren Begrenzung der Anschlag 77 dient.

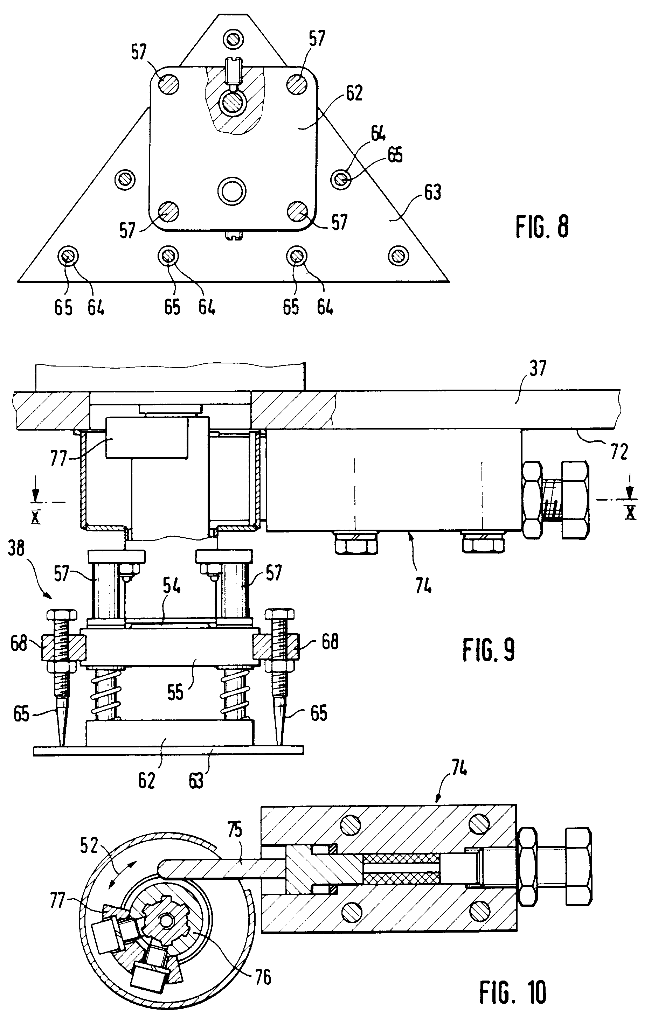

Die Wirkungsweise dieses Teils der Greifer 50 ist wie folgt: Die Ausgangslage ist in Fig. 9 und links in Fig. 6 wiedergegeben. Wird nun der Kolben 54 aus dem Zylinder 53 ausgefahren, bewegt er die Platte 55 nach unten. Über die von den auf den Stiften 57 sitzenden Federn ausgeübte Kraft folgt die Platte 62 dieser Abwärtsbewegung. Nach entsprechendem Hub gelangt das abgekröpfte obere Ende 78 der Stifte 57 zum Anschlag an einem ringförmigen Kragen 79 des Zylinders 53. Damit endet der Hub der auf den unteren Enden der Stifte 57 befestigten Platte 62 mit der Grundplatte 63 in Abstand 67 über dem Teigstück 7. Bei andauernder Beaufschlagung des Kolbens 54 wird nun die Platte 55, die an ihrem Umfang den Rahmen 68 mit den Greiferdornen 65 trägt, weiter abwärts bewegt und zwar unter zunehmender Kompression der Federn 60. Die Dorne treten durch die Öffnungen 64 der Grundplatte 63 hindurch und, wie Fig. 6 erkennen läßt, in das Teigstück 7 ein. In dieser Stellung üben sie ihre Greiferwirkung aus und können nun bei Bewegung der Greifereinheiten 38 mit dem Schlitten 24 und innerhalb des Schlittens 24 das jeweilige Teigstück 7 auf der Oberfläche 80 des jeweiligen Bandes 1, 2 verschieben bzw. in Pfeilrichtung 52 um die Mittellängsachse der Greifer 50 verdrehen. Durch den entgegengesetzten Hub des Kolbens 54 der Greifer 50 gelangen die Greiferdorne 65 außer Eingriff mit dem Teigstück 7 und geben dieses damit zur weiteren Bewegung auf dem Band 1, 2 frei.

In einer nicht im einzelnen wiedergegebenen Weise kann der Schlitten 24 um eine beispielsweise bei 81 in Fig. 4 liegende Querachse hochgeschwenkt werden, so daß die Unterteile der Greifer 50 zur Wartung oder Auswechslung ihrer Werkzeuge leicht zugängig sind. Die Vorrichtung ist mit einer im einzelnen nicht wiedergegebenen elektronischen Steuerung versehen, deren Programm auf die vorbestimmten Bewegungsabläufe abgestellt ist. Durch entsprechende Tastelemente wird der funktionsgerechte Ablauf kontrolliert

## Patentansprüche

1. Vorrichtung zur Herstellung von Backwerk unter Ausschneiden von nebeneinanderliegenden Teigstücken (7) aus einer auf einem Transportband (1,2) taktweise zugeführten Teigbahn (4) und anschließendem Vereinzeln und Positionieren der Teigstücke (7) mittels sie einzeln bewegender Greifeinheiten (38), deren Anzahl der Zahl und deren räumliche Anordnung der Position der in wenigstens einer Reihe (12,13) nebeneinanderliegenden Teigstücke (7) entsprechen und die zwischen einer Stellung im Abstand über den Teigstücken und einer Eingriffstellung in diese sowie um ihre vertikale Achse verstellbar sind, dadurch gekennzeichnet, daß über dem Transportband (1,2) ein achsparallel zu diesem verstellbarer Schlitten (24) in beidseitig an einem Maschinenrahmen (20) angeordneten Führungen (22) gelagert und durch eine Antriebseinrichtung (28,29) mit dem Maschinenrahmen (20) verbunden ist, und daß am Schlitten (24) die Greifeinheiten (38) nebeneinander und im rechten Winkel zur Transport-Bewegungsrichtung (3) je auf einer zwischen Seitenwangen (33) des Schlittens (24) angeordneten Parallelführung (35) verschiebbar gelagert sind und mit dem Schlitten (24) in Antriebsverbindung stehen.

2. Vorrichtung nach Anspruch 1, dadurch gekennzeichnet, daß der Schlitten (24) in beidseitig an dem Maschinenrahmen (20) angeordneten Führungen (22) gelagert ist.

3. Vorrichtung nach Anspruch 2, dadurch gekennzeichnet, daß an dem Maschinenrahmen (20) ein Kettentrieb (28) angeordnet ist, an den der Schlitten (24) angeschlagen ist.

4. Vorrichtung nach mindestens einem der Ansprüche 1 bis 3, dadurch gekennzeichnet, daß die Greifeinheiten (38) je eine Grundplatte (37) aufweisen, die gemeinsam auf der zwischen zwei Seitenwangen (33) des Schlittens (24) angeordneten Parallelführung (35) verschiebbar gelagert ist.

5. Vorrichtung nach Anspruch 4, dadurch gekennzeichnet, daß je zwei Greifeinheiten (38) in einander entsprechendem Abstand von einer Längsmittelebene (46) einen gemeinsamen Antrieb aufweisen.

6. Vorrichtung nach Anspruch 4 und 5, dadurch gekennzeichnet, daß der Antrieb für je zwei Greifeinheiten (38) eine in den Seitenwangen (33) des Schlittens (24) gelagerte antreibbare Gewindespindel (42,45) aufweist, die an beiden Hälften eine einander entgegengerichtete Gewindesteigung aufweist und auf der je eine mit einer Greifeinheit (38) verbundene Spindelmutter (41) sitzt.

7. Vorrichtung nach mindestens einem der Ansprüche 4 bis 6, dadurch gekennzeichnet, daß mehrere je zwei Greifeinheiten (38) zugeordnete Gewindespindeln (42,45) übereinander in den Seitenwangen (33) des Schlittens (24) gelagert sind.

8. Vorrichtung nach mindestens einem der Ansprüche 1 bis 7, dadurch gekennzeichnet, daß bei einer ungeraden Anzahl von nebeneinander angeordneten Greifeinheiten (38) die mittlere Greifeinheit (38'') unverschiebbar gelagert ist.

9. Vorrichtung nach mindestens einem der Ansprüche 1 bis 8, dadurch gekennzeichnet, daß die Bewegungsbahn eines jeden Paares von Greifeinheiten (38) durch beidseitige Anschläge (49) nach außen begrenzt ist.

10. Vorrichtung nach mindestens einem der Ansprüche 1 bis 9, dadurch gekennzeichnet, daß jede Greifeinheit (38) wenigstens zwei Greifer (50) in zum Transportband achsparalleler Richtung hintereinander aufweist, von denen jede Reihe (51) einer Reihe (12,13) der ausgeschnittenen Teigstücke (7) zugeordnet ist.

11. Vorrichtung nach Anspruch 10, dadurch gekennzeichnet, daß die Transportgeschwindigkeit des die vereinzelten Teigstücke (7) abfördernden Transportbandes (2) verschieden von der des Schlittens (24) ist und daß die Greifer (50) zeitlich versetzt die Teigstücke (7) freigeben.

12. Vorrichtung nach mindestens einem der Ansprüche 1 bis 11, dadurch gekennzeichnet, daß die Greifer (50) eine in ihrer Kontur der Grundform der Teigstücke (7) entsprechende auswechselbare Grundplatte (63) aufweisen.

13. Vorrichtung nach mindestens einem der Ansprüche 1 bis 12, dadurch gekennzeichnet, daß an einer ausfahrbaren Fußplatte (55) des Greifers (50) ein Satz von durch Bohrungen (64) in der Grundplatte (63) in das Teigstück (7) eingreifenden Dornen (65) angeordnet ist.

14. Vorrichtung nach Anspruch 13, dadurch gekennzeichnet, daß die Dorne (65) an einem mittels eines Schnellverschlusses (71) an der Fußplatte (55) zu befestigenden Rahmen (68) angeordnet sind.

15. Vorrichtung nach einem der Ansprüche 1 bis 14, dadurch gekennzeichnet, daß der Schlitten (24) um eine quer zur Bewegungsrichtung (3) des Bandes (1,2) verlaufende Achse (81) hochklappbar ist.

## Claims

1. Device for preparing baked goods by cutting out adjacent pieces of dough (7) from a dough strip (4) supplied in a timed manner on a conveyor belt (1, 2) and by subsequent separation and positioning of the pieces of dough (7) by means of gripper units (38) moving them individually, the number of these corresponding to the number and spatial arrangement of the pieces of dough (7) lying next to one another in at least one row (12, 13), the gripper units (38) being adjustable between a position with clearance above the pieces of dough and a position of engagement therein as well as about their vertical axis, characterised in that over the conveyor belt (1, 2) a slide (24) displaceable axially parallel thereto is mounted in guides (22) provided on either side of a machine frame (20) and is connected by a drive mechanism (28, 29) to the machine frame (20), and in that on the slide (24) the gripper units (38) are displaceably mounted next to one another and at right-angles to the conveying direction (3) on a respective parallel guide (35) disposed between side members (33) of the slide (24) and are drivingly connected to the slide (24).

2. Device according to claim 1, characterised in that the slide (24) is mounted in guides (22) disposed on either side of the machine frame (20).

3. Device according to claim 2, characterised in that a chain drive (28) to which the slide (24) is connected is provided on the machine frame (20).

4. Device according to at least one of claims 1 to 3, characterised in that the gripper units (38) each have a base plate (37), the base plates being displaceably mounted together on the parallel guide (35) disposed between the side members (33) of the slide (24).

5. Device according to claim 4, characterised in that every two gripper units (38) have a common drive at a mutually corresponding distance from a central longitudinal plane (46).

6. Device according to claim 4 and 5, characterised in that the drive for every two gripper units (38) has a drivable threaded spindle (42, 45) mounted in the side members (33) of the slide (24), which drive has opposite thread pitches in each half, a spindle nut (41) connected to a gripper unit (38) being mounted on each threaded spindle (42, 45).

7. Device according to at least one of claims 4 to 6, characterised in that a plurality of threaded spindles (42, 45) associated with every two gripper units (38) are mounted one above another in the side members (33) of the slide (24).

8. Device according to at least one of claims 1 to 7, characterised in that when there is an uneven number of adjacent gripper units (38) the central gripper (38'') is mounted non-displaceably.

9. Device according to at least one of claims 1 to 8, characterised in that the path of motion of each pair of gripper units (38) is limited on the outside by bilateral stops (49).

10. Device according to at least one of claims 1 to 9, characterised in that each gripper unit (38) has at least two grippers (50) mounted consecutively in the direction axially parallel to the conveyor belt, each row (51) of which is associated with a row (12, 13) of the cut-out pieces of dough (7).

11. Device according to claim 10, characterised in that the conveying speed of the conveyor belt (2) conveying the separated pieces of dough (7) is different from that of the slide (24) and in that the grippers (50) release the pieces of dough (7) at staggered times.

12. Device according to at least one of claims 1 to 11, characterised in that the grippers (50) have an exchangeable base plate (63) whose contour corresponds to the basic shape of the pieces of dough (7).

13. Device according to at least one of claims 1 to 12, characterised in that a set of prongs (65) engaging into the dough piece (7) through bores (64) in the base plate (63) is mounted on an extensible foot plate (55).

14. Device according to claim 13, characterised in that the prongs (65) are disposed on a frame (68) to be fixed to the foot plate (55) by means of a rapid seal (71).

15. Device according to one of claims 1 to 14, characterised in that the slide (24) can be lifted up about an axis (81) extending transverse to the direction of motion (3) of the belt (1, 2).

## Revendications

1. Dispositif pour préparer des produits de boulangerie par découpage de morceaux de pâte (7) disposés côte à côte, à partir d'un cordon de pâte (4) amené de façon cadencée sur une bande de transport (1,2),et ensuite par séparation et positionnement des morceaux de pâte (7) à l'aide d'unités de préhension (38) qui les déplacent individuellement et dont le nombre et la disposition spatiale correspondent au nombre et à la position des morceaux de pâte (7) disposés côte à côte dans au moins une rangée (12,13), et qui peuvent être déplacés entre une position située à distance et au-dessus des morceaux de pâte et une position d'engagement dans ces morceaux de pâte ainsi qu'autour de leur axe vertical, caractérisé en ce qu'au-dessus de la bande de transport (1,2), un chariot (24), qui est déplaçable avec son axe parallèle à cette bande, est monté dans des guides (22) disposés des deux côtés sur un châssis (20) de la machine et est relié par un dispositif d'entraînement (28,29) au châssis (20) de la machine, et en ce que les unités de préhension (38) sont disposées côte à côte sur le chariot, perpendiculairement à la direction de déplacement (3) lors du transport, respectivement sur un guide parallèle (35) disposé entre des flasques latéraux (33) du chariot (24) et sont reliées selon une liaison d'entraînement au chariot (24).

2. Dispositif selon la revendication 1, caractérisé en ce que la chariot (24) est monté dans des guides (22) disposés des deux côtés du châssis (20) de la machine.

3. Dispositif selon la revendication 2, caractérisé en ce que sur le châssis (20) de la machine est disposé un dispositif d'entraînement à chaîne (28), auquel est accroché le chariot (24).

4. Dispositif selon au moins l'une des revendications 1 à 3, caractérisé en ce que les unités de préhension (38) possèdent chacune une plaque de base (37), qui est montée de manière à être déplaçable en commun sur le guide parallèle (35) disposé entre deux flasques latéraux (33) et le chariot (24).

5. Dispositif selon la revendication 4, caractérisé en ce que respectivement deux unités de préhension (38) possèdent un dispositif d'entraînement commun, à une distance correspondante d'un plan médian longitudinal (46).

6. Dispositif selon les revendications 4 et 5, caractérisé en ce que le dispositif d'entraînement possède, pour respectivement deux unités de préhension (38), une broche filetée pouvant être entraînée (42,45), qui est montée dans les flasques latéraux (33) du chariot (24) et qui possède, sur ses deux moitiés, des filetages tournant en des sens opposés et sur laquelle est vissé respectivement un écrou de broche (41) relié à une unité de préhension( 38).

7. Dispositif selon au moins l'une des revendications 4 à 6, caractérisé en ce que plusieurs broches filetées (42,45) associées respectivement à deux unités de préhension (38) sont montées en position superposée dans les flasques latéraux (33) du chariot (24).

8. Dispositif selon au moins l'une des revendications 1 à 7, caractérisé en ce que dans le cas d'un nombre impair d'unités de préhension (38) disposées côte à côte, l'unité de préhension médiane (38'') est montée immobile.

9. Dispositif selon au moins l'une des revendications 1 à 8, caractérisé en ce que la voie de déplacement de chaque couple d'unités de préhension (38) est limitée vers l'extérieur par des butées (49) situées des deux côtés.

10. Dispositif selon au moins l'une des revendications 1 à 9, caractérisé en ce que chaque unité de préhension (38) possède au moins deux organes de préhension (50) disposés l'un derrière l'autre dans une direction parallèle à l'axe de la bande de transport et à chaque rangée (51) de tels organes de préhension est associée une rangée (12,13) des morceaux de pâte découpés (7).

11. Dispositif selon la revendication 10, caractérisé en ce que la vitesse de transport de la bande de transport (2) qui évacue les morceaux de pâte séparés (7) est différente de la vitesse de déplacement du chariot (24) et en ce que les organes de préhension (50) libèrent les morceaux de pâte (7) d'une manière décalée dans le temps.

12. Dispositif selon au moins l'une des revendications 1 à 11, caractérisé en ce que les organes de préhension (50) possèdent une plaque de base interchangeable (63), dont le contour correspond à la forme de base des morceaux de pâte (7).

13. Dispositif selon au moins l'une des revendications 1 à 12, caractérisé en ce qu'un jeu de broches (65), qui pénètrent dans le morceau de pâte (7) en traversant des perçages (64) ménagés dans la plaque de base (63), sont disposées sur une plaque de base amovible (55) de l'organe de préhension (50).

14. Dispositif selon la revendication (13), caractérisé en ce que les broches (65) sont disposées sur un cadre (68), qui doit être fixé à la plaque de base (55) à l'aide d'un système de fermeture rapide (71).

15. Dispositif selon l'une des revendications 1 à 14, caractérisé en ce que le chariot (24) peut être relevé autour d'un axe (81) qui s'étend transversalement par rapport à la direction de déplacement (3) de la bande (1,2).
